# EUROPÄISCHE PATENTSCHRIFT

(11) **EP 3 156 821 B1**
(45) Veröffentlichungstag und Bekanntmachung des Hinweises auf die Patenterteilung: **11.07.2018**
(21) Anmeldenummer: 16001863.6
(22) Anmeldetag: 24.08.2016
(51) Int. Cl.: G01S 15/93, B60R 19/48, B60R 11/04, G01S 7/521, H01Q 1/32, H01Q 1/42, G01S 13/93, G01S 7/02

(54) **ABDECKKAPPE FÜR EINE ABSTANDSMESSEINRICHTUNG**
COVER FOR A DISTANCE MEASURING DEVICE
CAPUCHON POUR UN TELEMETRE

(30) Priorität: 13.10.2015 DE 102015013137
(43) Veröffentlichungstag der Anmeldung: 19.04.2017
(73) Patentinhaber: MAN Truck & Bus AG, 80995 München (DE)
(72) Erfinder: Kopp, Stephan, 83623 Ascholding (DE); Hölting, Christoph, 85567 Bruck Pienzenau (DE); Mangold, Markus, 85221 Dachau (DE); Tigges, Gunnar, 82178 Puchheim (DE)
(74) Vertreter: v. Bezold & Partner Patentanwälte - PartG mbB

(56) Entgegenhaltungen:
- EP-A2- 1 316 476
- DE-A1-102004 036 746
- DE-A1-102012 009 747
- DE-U1- 20 214 892
- DE-U1-202004 018 784
- US-A- 4 803 670
- US-A1- 2012 167 689

## Beschreibung

Die Erfindung betrifft eine Abdeckkappe für eine Abstandsmesseinrichtung, z. B. einen Sensor, insbesondere einen Abstands- und/oder Radarsensor, und zur Montage an ein Fahrzeug-Frontbauteil, insbesondere ein Nutzfahrzeug-Frontbauteil.
Kraftfahrzeuge werden aus Komfort- und Sicherheitsgründen zunehmend mit auf Abstandssensoren basierenden Abstandssystemen ausgerüstet. Die Abstandssensoren sind an der Kraftfahrzeugfront montiert und sollen den Abstand zu einem vorausfahrenden Fahrzeug bestimmen, so dass bei zu geringem Abstand die Geschwindigkeit der Kraftfahrzeuge reduziert und zweckmäßig ein eingestellter bzw. vorbestimmter Abstand zu dem vorausfahrenden Fahrzeug eingehalten werden kann. Die Abstandssensoren sind dabei üblicherweise mit Abdeckkappen versehen, um die Abstandssensoren vor Schmutz und Umwelteinflüssen zu schützen. Aus der Praxis bekannte Abdeckkappen umfassen üblicherweise hierzu insbesondere eine vertikale Frontfläche. Eine vertikale Frontfläche neigt aber einerseits zur Verschmutzung und Wasser-/Schneeablagerungen und ist andererseits luftströmungsungünstig. US2012/0167689 A1 offenbart eine Abdeckkappe gemäß dem Oberbegriff des Patentanspruchs 1. Eine Aufgabe der Erfindung ist es, eine Abdeckkappe mit geringer Ablagerungsneigung (z. B. gegenüber Schmutz, Schnee, Regenwasser, Spritzwasser oder anderen Umwelteinflüssen) zu schaffen, die vorzugsweise zugleich eine verbesserte Fahrtwindaerodynamik aufweist und/oder mit der zugleich die Kühlleistung einer hinter einer Fahrzeugfront angeordneten Kühleinrichtung (z. B. Motorkühler) verbessert werden kann.
Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen entnommen werden.
Die Erfindung schafft eine Abdeckkappe für eine Abstandsmesseinrichtung, z. B. einen Sensor, insbesondere einen Abstands- und/oder Radarsensor. Die Abdeckkappe dient zweckmäßig zur Montage an ein Fahrzeug-Frontbauteil, z. B. an ein Nutzfahrzeug-Frontbauteil, insbesondere ein Frontbauteil eines Lastkraftwagens oder eines Omnibusses.
Das Fahrzeug-Frontbauteil ist vorzugsweise ein Stoßfänger. Der Stoßfänger kann z. B. zumindest eine Öffnung umfassen, über die Fahrtwind einer Fahrzeug-Kühleinrichtung (z. B. Motorkühler) zuführbar ist. Alternativ oder ergänzend kann der Stoßfänger z. B. Öffnungen für Fahrzeugscheinwerfer und/oder Fahrtrichtungsanzeiger und/oder eine oder mehrere Trittstufenaussparungen aufweisen.

Die Abdeckkappe umfasst zweckmäßig zwei laterale Seitenflächen und eine Frontfläche und zeichnet sich insbesondere dadurch aus, dass die Frontfläche aus der Vertikalen abweicht, insbesondere sich von oben vorne nach unten hinten erstreckt. Die Frontfläche wird vorzugsweise durch einen, zweckmäßig relativ zur Vorwärts-Fahrtrichtung des Fahrzeugs, vorderen, oberen Kantenbereich und einen hinteren, unteren Kantenbereich begrenzt.

Im Rahmen der Erfindung kann der vordere, obere Kantenbereich und/oder der hintere, untere Kantenbereich zweckmäßig eckig, abgeschrägt (z. B. kantig) oder abgerundet, z. B. mit einem oder mehreren Radien versehen, ausgeführt sein. Der hintere, untere Kantenbereich kann z. B. frei auskragend ausgebildet sein. Der vordere, obere Kantenbereich stellt somit vorzugsweise einen vorderen, oberen Begrenzungsbereich der Frontfläche dar, während der hintere, untere Kantenbereich zweckmäßig einen unteren, hinteren Begrenzungsbereich der Frontfläche darstellt.

Die Frontfläche mit dem vorderen, oberen Kantenbereich und dem hinteren, unteren Kantenbereich ist einerseits zweckmäßig strömungsoptimiert und gewährleistet andererseits eine Reduzierung von Störungen durch Witterungs- und/oder Verschmutzungseinflüssen (z. B. Regenwasser, Spritzwasser, Schnee, Schmutz etc.).

Die Frontfläche ermöglicht insbesondere einen reduzierten Fahrtwind-Staudruck auf die Abdeckkappe und somit eine reduzierte Verschmutzungs- und Schnee-/Wasserablagerungsneigung und eine verbesserte Fahrtwindaerodynamik (Strömungsverhalten, Luftwiderstand etc.) der Abdeckkappe.

Die Frontfläche ermöglicht ebenfalls eine reduzierte Strömungsablösung hinter der Abdeckkappe, so dass dadurch z. B. die Fahrtwindanströmung für die Kühleinrichtung oder die Fahrtwindaerodynamik der Abdeckkappe allgemein verbessert werden kann. Alternativ oder ergänzend kann die Frontfläche als Luftleitelement genutzt werden, um Fahrtwind zu einer vorzugsweise in dem Fahrzeug-Frontbauteil ausgebildeten Öffnung zu lenken, über die Fahrtwind der Kühleinrichtung zugeführt werden kann.

Der vordere, obere Kantenbereich bildet vorzugsweise den Übergangsbereich zwischen der Frontfläche und einer Dachfläche der Abdeckkappe. Der hintere, untere Kantenbereich kann z. B. den Übergangsbereich zwischen der Frontfläche und einer Bodenfläche der Abdeckkappe bilden, aber auch zweckmäßig frei vorkragend sein oder z. B. im Wesentlichen dicht an dem Fahrzeug-Frontbauteil anliegen. Die Unterseite der Abdeckkappe kann somit geschlossen oder offen ausgeführt sein.
Es ist möglich, dass die Abdeckkappe die Abstandsmesseinrichtung vorne, oben, unten und/oder seitlich zumindest abschnittsweise überdeckt.
Es ist möglich, dass die Frontfläche schräg und vorzugsweise im Wesentlichen eben oder konkav ausgeformt ist.
Der vordere, obere Kantenbereich und/oder der untere, hintere Kantenbereich können zweckmäßig abgerundet ausgeformt sein, wodurch Strömungsablösungen reduziert werden und die Umströmung der Abdeckkappe weiter verbessert werden kann.
Ein jeweiliger Kantenbereich zwischen der Frontfläche und den Seitenflächen kann ebenfalls abgerundet ausgeformt sein, wodurch Strömungsablösungen reduziert werden und die Umströmung der Abdeckkappe weiter verbessert werden kann.
Es ist möglich, dass insbesondere frontseitige Eckbereiche der Abdeckkappe abgerundet ausgeformt sind, wodurch Strömungsablösungen reduziert werden und die Umströmung der Abdeckkappe weiter verbessert werden kann. Die Seitenflächen verjüngen sich von oben nach unten und sind z.B. im Wesentlichen trapezförmig ausgebildet, zweckmäßig als im Wesentlichen rechtwinkliges Trapez.
Die Abdeckkappe kann ferner eine Dachfläche umfassen, die die Abstandsmesseinrichtung zweckmäßig oben überdecken kann.
Die Abdeckkappe kann einstückig, vorzugsweise aus einem einstückig-integralen Bauteil ausgebildet sein, insbesondere umfassend die Seitenflächen, die Frontfläche, zweckmäßig die Dachfläche und vorzugsweise eine Bodenfläche.
Die Frontfläche kann bis zum hinteren, unteren Kantenbereich vorzugsweise durchgehend abfallen. Die Frontfläche fällt in einem Winkelbereich zwischen einschließlich 5° und einschließlich 60° nach hinten unten ab. Die Abdeckkappe kann z. B. eine Montageeinrichtung zur Montage an das Fahrzeug-Frontbauteil aufweisen, insbesondere einen oder mehrere vorzugsweise von den Seitenflächen, der Frontfläche, der Dachfläche und/oder der Bodenfläche abstehende Befestigungsflansche.

Die Abdeckkappe, insbesondere die Frontfläche, kann einen Lotus-Effekt aufweisendes Material umfassen. Dabei kann die Abdeckkappe, insbesondere die Frontfläche, aus einem Lotus-Effekt aufweisenden Material hergestellt sein oder z. B. mit einer einen Lotus-Effekt aufweisenden Beschichtung versehen sein. Der Lotus-Effekt führt zweckmäßig zu einer geringen Oberflächen-Benetzbarkeit und somit zu einer verringerten Anhaftung von Schmutz, Wasser, Schnee etc.

Die Abstandsmesseinrichtung dient zweckmäßig zum Messen eines Abstands zu einem vorausfahrenden Fahrzeug und kann insbesondere Teil eines Fahrerassistenzsystems, z. B. eines Notbremsassistenten, und/oder einer automatischen Distanzregelung für das Fahrzeug sein.

Die Abdeckkappe ist insbesondere radartauglich ausgeführt, so dass sie insbesondere in Kombination mit einem Radarsensor nutzbar ist.

Die Erfindung ist nicht auf eine Abdeckkappe beschränkt, sondern umfasst auch ein Fahrzeug-Frontbauteil, insbesondere einen Stoßfänger für ein Fahrzeug, vorzugsweise ein Nutzfahrzeug, z. B. einen Lastkraftwagen oder einen Omnibus. Das Fahrzeug-Frontbauteil ist zweckmäßig mit einer Abdeckkappe wie hierin offenbart versehen.

Das Fahrzeug-Frontbauteil ist vorzugsweise ein Front-Stoßfänger. Der Front-Stoßfänger kann z. B. zumindest eine Öffnung umfassen, über die Fahrtwind einer Fahrzeug-Kühleinrichtung (z. B. Motorkühler) zuführbar ist. Alternativ oder ergänzend kann der Front-Stoßfänger z. B. Öffnungen für Fahrzeugscheinwerfer und/oder Fahrtrichtungsanzeiger und/oder zumindest eine Trittstufenaussparung aufweisen.

Die Abdeckkappe kann z. B. in einer Trittstufenaussparung des Fahrzeug-Frontbauteils angeordnet werden.

Das Fahrzeug-Frontbauteil kann z. B. aus Kunststoff oder Stahl hergestellt sein.

Es ist möglich, dass die Frontfläche der Abdeckkappe als Windleitelement dient, um Fahrtwind zu der vorzugsweise im Fahrzeug-Frontbauteil ausgebildeten Öffnung zu leiten, über die Fahrtwind der Kühleinrichtung zugeführt werden kann.

Die Frontfläche kann somit als Windleitelement genutzt werden und reduziert zudem die Strömungsablösung hinter der Abdeckkappe, wodurch die Kühleranströmung verbessert werden kann.

Die Erfindung umfasst darüber hinaus ein Fahrzeug, vorzugsweise ein Nutzfahrzeug, mit einem Fahrzeug-Frontbauteil wie hierin offenbart.

Das hierin offenbarte Fahrzeug ist vorzugsweise ein Nutzfahrzeug, insbesondere ein Lastkraftwagen oder ein Omnibus.

Die vorstehend beschriebenen Merkmale und Ausführungsformen der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen in Verbindung mit den beigefügten Figuren.
- Figur 1: zeigt eine stark schematische perspektivische Ansicht einer Abdeckkappe gemäß einer Ausführungsform der Erfindung,
- Figur 2: zeigt eine stark schematische Seitenansicht der Abdeckkappe der Figur 1,
- Figur 3: zeigt eine perspektivische Ansicht eines Fahrzeug-Frontbauteils mit einer Abdeckkappe gemäß einer Ausführungsform der Erfindung,
- Figur 4: zeigt eine andere perspektivische Ansicht des Fahrzeug-Frontbauteils der Figur 3.

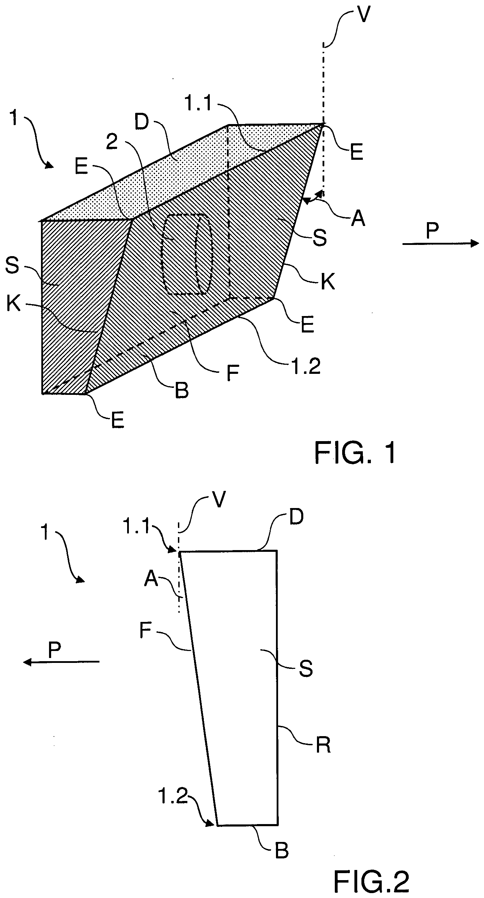

Figur 1 zeigt eine stark schematische perspektivische Ansicht einer Abdeckkappe 1 gemäß einer Ausführungsform der Erfindung, während Figur 2 eine zugehörige Seitenansicht zeigt.

Die Abdeckkappe 1 wird nachfolgend unter gemeinsamer Bezugnahme auf die Figuren 1 und 2 beschrieben.

Die Abdeckkappe 1 dient zur Montage an ein Fahrzeug-Frontbauteil und zur Aufnahme einer in Figur 1 nur schematisch dargestellten Abstandsmesseinrichtung 2 zum Messen des Abstands zu einem vorausfahrenden Fahrzeug. Die Abstandsmesseinrichtung 2 kann z. B. einen Abstands- und/oder Radarsensor umfassen und Teil eines Fahrerassistenzsystems sein.

Die Abdeckkappe 1 umfasst, relativ zur Vorwärts-Fahrtrichtung P des Fahrzeugs, eine vordere Frontfläche F, zwei laterale Seitenflächen S und eine Dachfläche D. Die Unterseite der Abdeckkappe 1 kann optional eine Bodenfläche B aufweisen, aber auch zumindest teilweise offen ausgeführt sein. Ferner kann die Frontfläche F z. B. an das Fahrzeug-Frontbauteil oder eine Rückfläche R der Abdeckkappe 1 herangeführt sein, so dass die Abdeckkappe 1 nach unten hin im Wesentlichen dicht bzw. geschlossen ausgebildet ist und z. B. eine wie in Figur 1 gezeigte Bodenfläche B nicht erforderlich ist.

Die Frontfläche F wird durch einen, relativ zur Vorwärts-Fahrtrichtung P des Fahrzeugs, vorderen, oberen Kantenbereich 1.1 und einen hinteren, unteren Kantenbereich 1.2 begrenzt, so dass die Frontfläche F den vorderen, oberen Kantenbereich 1.1 und den hinteren, unteren Kantenbereich 1.2 miteinander verbindet und somit aus der Vertikalen V abweicht und zwar insbesondere nach hinten und unten abfällt. Dadurch kann das Strömungsverhalten der Abdeckkappe 1 gegenüber einer vertikalen Frontflächenausrichtung verbessert werden, der Fahrtwindstaudruck reduziert werden und das Anhaften von Schmutz, Wasser, Schnee etc. auf der Frontfläche F verringert werden.

Die Frontfläche F fällt vorzugsweise in einem Winkelbereich A zwischen 5° und 60° nach hinten unten ab.

Der in den Figuren 1 und 2 dargestellte vordere, obere Kantenbereich 1.1 und der hintere, untere Kantenbereich 1.2 sind kantig oder eckig ausgebildet. Im Rahmen der Erfindung kann der vordere, obere Kantenbereich 1.1 und vorzugsweise der hintere, untere Kantenbereich 1.2 auch abgeschrägt oder abgerundet ausgebildet werden.

Die in den Figuren 1 und 2 dargestellten vorderen Eckbereiche E der Abdeckkappe 1 sind kantig oder eckig ausgebildet. Im Rahmen der Erfindung können die Eckbereiche E auch abgeschrägt oder abgerundet ausgebildet werden.

Durch die Abrundungen Strömungsablösungen hinter der Abdeckkappe 1 reduziert werden. Dadurch kann das Strömungsverhalten bzw. die Fahrtwindaerodynamik der Abdeckkappe 1 weiter verbessert werden.

Die in den Figuren 1 und 2 dargestellte Frontfläche F ist schräg und zweckmäßig eben ausgebildet und somit mit einer Schräge versehen. Im Rahmen der Erfindung kann die Frontfläche F auch konkav-gekrümmt ausgebildet sein.

Die Seitenflächen S verjüngen sich nach unten und sind vorzugsweise im Wesentlichen trapezförmig, zweckmäßig als im Wesentlichen rechtwinkliges Trapez ausgebildet.

Die Abdeckkappe 1 mit den Seitenflächen S, der Frontfläche F, der Dachfläche D und der optionalen Bodenfläche B wird aus einem einstückig-integralen Bauteil gebildet.

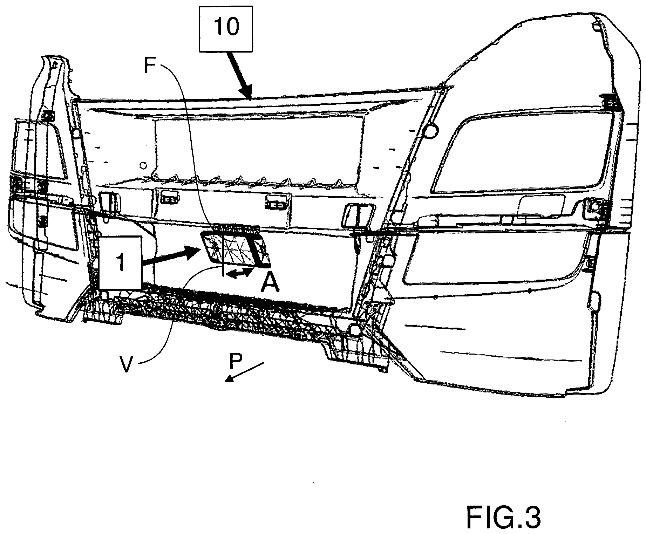

Figur 3 zeigt eine perspektivische Ansicht eines Fahrzeug-Frontbauteils 10 mit einer Abdeckkappe 1 gemäß einer Ausführungsform der Erfindung. Die Abdeckkappe 1 kann gemäß den Figuren 1 und 2 ausgebildet werden.

Das Fahrzeug-Frontbauteil 10 ist als Nutzfahrzeug-Stoßfänger ausgebildet, mit z. B. integrierten Öffnungen für Frontscheinwerfer und Fahrtrichtungsanzeiger (Blinker) und einer oder mehreren Luftdurchlassöffnungen, über die Fahrtwind einer Kühleinrichtung, z. B. einem Motorkühler, zugeführt werden kann. Des Weiteren umfasst das Fahrzeug-Frontbauteil 10 zwei Trittstufenaussparungen.

Dadurch, dass die Frontfläche F nach hinten unten abfällt, kann die Frontfläche F als Windleitelement genutzt werden, um Fahrtwind gezielt zu der Luftdurchlassöffnung zu leiten. Ebenfalls ermöglicht die Abdeckkappe 1 ein reduziertes Ablösegebiet hinter der Abdeckkappe 1. Dadurch kann mittels der Abdeckkappe 1 die Kühleranströmung und somit die Kühlerleistung verbessert werden.

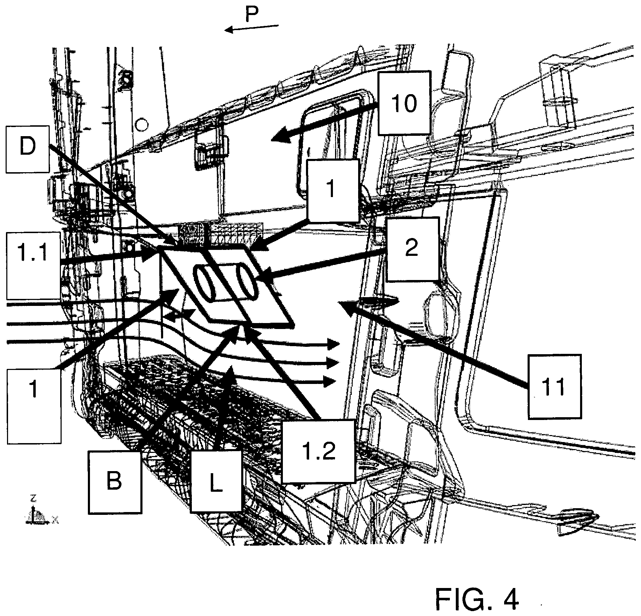

Figur 4 zeigt eine andere perspektivische Ansicht des Fahrzeug-Frontbauteils 10 der Figur 3 mit stark schematisch dargestellter Abdeckkappe 1.

Bezugszeichen L kennzeichnet dabei eine Fahrtwind-Luftströmung, die auf vorteilhafte Weise mittels der Frontfläche F nach hinten über die Luftdurchlassöffnung in dem Fahrzeug-Frontbauteil 10 zu der Kühleinrichtung weitergeleitet werden kann, deren Position durch das Bezugszeichen 11 schematisch angedeutet ist.

Figur 4 zeigt ferner die Vertikale V und den Winkelbereich A, allerdings der Übersichtlichkeit halber ohne Bezugszeichen.

### Bezugszeichenliste

- 1: Abdeckkappe
- 1.1: Vorderer, oberer Kantenbereich 1.1
- 1.2: Hinterer, unterer Kantenbereich 1.2
- 2: Abstandsmesseinrichtung, insbesondere Abstands- und/oder Radarsensor
- F: Frontfläche
- S: Laterale Seitenflächen
- D: Dachfläche
- B: Bodenfläche
- R: Rückfläche
- K: Kantenbereiche, zweckmäßig seitlich
- E: Eckbereiche
- 10: Fahrzeug-Frontbauteil, insbesondere Stoßfänger
- 11: Kühleinrichtung bzw. Position hierfür
- P: Vorwärts-Fahrtrichtung des Fahrzeugs
- V: Vertikale
- A: Winkelbereich
- L: Luftströmung

## Patentansprüche

1. Abdeckkappe (1) für eine Abstandsmesseinrichtung (2) und zur Montage an ein Fahrzeug-Frontbauteil (10), mit Seitenflächen (S) und einer Frontfläche (F), wobei die Frontfläche (F) aus der Vertikalen (V) abweicht und insbesondere durch einen vorderen, oberen Kantenbereich (1.1) und einen hinteren, unteren Kantenbereich (1.2) begrenzt wird, **dadurch gekennzeichnet, dass** die Frontfläche (F) in einem Winkelbereich (A) zwischen 5° und 60° von der Vertikalen (V) abweicht und die Seitenflächen (S) sich von oben nach unten verjüngen.

2. Abdeckkappe (1) nach Anspruch 1, **dadurch gekennzeichnet, dass** die Frontfläche (F) schräg oder konkav ausgebildet ist.

3. Abdeckkappe (1) nach Anspruch 1 oder 2, **dadurch gekennzeichnet, dass** der vordere, obere Kantenbereich (1.1) und/oder der untere, hintere Kantenbereich (1.2) abgerundet ausgebildet ist.

4. Abdeckkappe (1) nach einem der vorhergehenden Ansprüche, **dadurch gekennzeichnet, dass** ein Kantenbereich (K) zwischen der Frontfläche (F) und den Seitenflächen (S) abgerundet ausgebildet ist.

5. Abdeckkappe (1) nach einem der vorhergehenden Ansprüche, **dadurch gekennzeichnet, dass** Eckbereiche (E) der Abdeckkappe (1) abgerundet ausgebildet sind.

6. Abdeckkappe (1) nach einem der vorhergehenden Ansprüche, **dadurch gekennzeichnet, dass** die Abdeckkappe (1) die Abstandsmesseinrichtung (2) vorne, oben, unten und/oder seitlich überdeckt.

7. Abdeckkappe (1) nach einem der vorhergehenden Ansprüche, **dadurch gekennzeichnet, dass** die Abdeckkappe (1) einstückig ausgebildet ist, insbesondere aus einem einstückig-integralen, die Seitenflächen (S) und die Frontfläche (F) umfassenden Bauteil.

8. Abdeckkappe (1) nach einem der vorhergehenden Ansprüche, **dadurch gekennzeichnet, dass** die Frontfläche (F) bis zum hinteren, unteren Kantenbereich (1.2) nach hinten abfällt.

9. Abdeckkappe (1) nach einem der vorhergehenden Ansprüche, **dadurch gekennzeichnet, dass** die Abdeckkappe (1) eine Montageeinrichtung, insbesondere einen oder mehrere Befestigungsflansche, zur Montage an das Fahrzeug-Frontbauteil (10) aufweist.

10. Abdeckkappe (1) nach einem der vorhergehenden Ansprüche, **dadurch gekennzeichnet, dass** die Abdeckkappe (1), insbesondere die Frontfläche (F), einen Lotuseffekt aufweisendes Material umfasst.

11. Fahrzeug-Frontbauteil (10), vorzugsweise Front-Stoßfänger für ein Kraftfahrzeug, mit einer Abdeckkappe (1) nach einem der vorhergehenden Ansprüche.

12. Fahrzeug-Frontbauteil (10) nach Anspruch 11, **dadurch gekennzeichnet, dass** die Frontfläche (F) als Windleitelement dient, um Fahrtwind zu einer Öffnung zu leiten, über die Fahrtwind einer Kühleinrichtung (11) zuführbar ist.

13. Fahrzeug, vorzugsweise Nutzfahrzeug, mit einem Fahrzeug-Frontbauteil (10) nach Anspruch 11 oder 12.

## Claims

1. A covering cap (1) for a distance measuring device (2) and for mounting on a vehicle front component (10), with side surfaces (S) and a front surface (F), wherein the front surface (F) differs from the vertical (V) and is bounded in particular by a front upper edge region (1.1) and a rear lower edge region (1.2), **characterized in that** the front surface (F) differs from the vertical (V) within an angular range (A) of between 5° and 60°, and the side surfaces (S) taper from the top downwards.

2. The covering cap (1) according to Claim 1, **characterized in that** the front surface (F) is of oblique or concave design.

3. The covering cap (1) according to Claim 1 or 2, **characterized in that** the front upper edge region (1.1) and/or the lower rear edge region (1.2) is of rounded design.

4. The covering cap (1) according to one of the preceding claims, **characterized in that** an edge region (K) between the front surface (F) and the side surfaces (S) is of rounded design.

5. The covering cap (1) according to one of the preceding claims, **characterized in that** corner regions (E) of the covering cap (1) are of rounded design.

6. The covering cap (1) according to one of the preceding claims, **characterized in that** the covering cap (1) covers the distance measuring device (2) at the front, at the top, at the bottom and/or laterally.

7. The covering cap (1) according to one of the preceding claims, **characterized in that** the covering cap (1) is formed as a single piece, in particular from a single piece and integral component comprising the side surfaces (S) and the front surface (F).

8. The covering cap (1) according to one of the preceding claims, **characterized in that** the front surface (F) drops rearwards as far as the rear lower edge region (1.2) .

9. The covering cap (1) according to one of the preceding claims, **characterized in that** the covering cap (1) has a mounting device, in particular one or more fastening flanges, for the mounting on the vehicle front component (10).

10. The covering cap (1) according to one of the preceding claims, **characterized in that** the covering cap (1), in particular the front surface (F) comprises material having a lotus effect.

11. A vehicle front component (10), preferably front bunker for a motor vehicle, with a covering cap (1) according to one of the preceding claims.

12. The vehicle front component (10) according to Claim 11, **characterized in that** the front surface (F) serves as a wind-directing element in order to direct headwind to an opening via which headwind can be supplied to a cooling device (11).

13. A vehicle, preferably utility vehicle, with a vehicle front component (10) according to Claim 11 or 12.

## Revendications

1. Capot protecteur (1) pour un télémètre (2) et destiné à être monté sur un élément frontal de véhicule (10), doté de faces latérales (S) et d'une face frontale (F), la face frontale (F) étant différente de la verticale (V) et étant délimitée notamment par une zone d'arête avant supérieure (1.1) et par une zone d'arête arrière inférieure (1.2), **caractérisé en ce que** dans une zone angulaire (A), la face frontale (F) diffère d'entre 5° et 60° de la verticale (V) et les faces latérales (S) se rétrécissent du haut vers le bas.

2. Capot protecteur (1) selon la revendication 1, **caractérisé en ce que** la face frontale (F) est conçue sous forme oblique ou concave.

3. Capot protecteur (1) selon la revendication 1 ou 2, **caractérisé en ce que** la zone d'arête avant supérieure (1.1) et/ou la zone d'arête arrière inférieure (1.2) est conçue sous forme arrondie.

4. Capot protecteur (1) selon l'une quelconque des revendications précédentes, **caractérisé en ce qu'**une zone d'arête (K) entre la face frontale (F) et les faces latérales (S) est conçue sous forme arrondie.

5. Capot protecteur (1) selon l'une quelconque des revendications précédentes, **caractérisé en ce que** des zones angulaires (E) du capot protecteur (1) sont conçues sous forme arrondie.

6. Capot protecteur (1) selon l'une quelconque des revendications précédentes, **caractérisé en ce que** le capot protecteur (1) recouvre le télémètre (2) à l'avant, en haut, en bas et/ou latéralement.

7. Capot protecteur (1) selon l'une quelconque des revendications précédentes, **caractérisé en ce que** le capot protecteur (1) est conçu en monobloc, notamment en un élément constitutif intégral en monobloc, comprenant les faces latérales (S) et la face frontale (F).

8. Capot protecteur (1) selon l'une quelconque des revendications précédentes, **caractérisé en ce que** la face frontale (F) décline vers l'arrière jusqu'à la zone d'arête arrière inférieure (1.2).

9. Capot protecteur (1) selon l'une quelconque des revendications précédentes, **caractérisé en ce que** le capot protecteur (1) comporte un système de montage, notamment une ou plusieurs brides de fixation, destinées à être monté sur l'élément frontal de véhicule (10).

10. Capot protecteur (1) selon l'une quelconque des revendications précédentes, **caractérisé en ce que** le capot protecteur (1), notamment la face frontale (F) comprend une matière faisant preuve d'un effet lotus.

11. Élément frontal de véhicule (10), de préférence pare-chocs avant destiné à un véhicule automobile, muni d'un capot protecteur (1) selon l'une quelconque des revendications précédentes.

12. Élément frontal de véhicule (10) selon la revendication 11, **caractérisé en ce que** la face frontale (F) fait office d'élément déflecteur d'air, destiné à diriger le vent de circulation vers une ouverture, par l'intermédiaire de laquelle du vent de circulation peut être guidé vers un système de refroidissement (11).

13. Véhicule, de préférence véhicule utilitaire, muni d'un élément frontal de véhicule (10) selon la revendication 11 ou 12.
